# EUROPEAN PATENT SPECIFICATION

(11) **EP 4 108 346 B1**
(45) Date of publication and mention of the grant of the patent: **01.10.2025**
(21) Application number: 21915545.4
(22) Date of filing: 30.11.2021
(51) Int. Cl.: B07C 5/34, H01M 10/04, B07C 5/36, H01M 10/42, H01M 50/536, H01M 10/54, H01M 50/609

(54) **BATTERY CELL MANUFACTURING APPARATUS INCLUDING REWORK AUTOMATION EQUIPMENT AND REWORK QUANTITY COUNTING METHOD USING SAME**
VORRICHTUNG ZUR BATTERIEZELLENHERSTELLUNG MIT AUTOMATISIERTER NACHBEARBEITUNG SOWIE VERFAHREN ZUR ZÄHLUNG DER ANFALLENDEN NACHBEARBEITUNG
APPAREIL DE FABRICATION D'ELEMENT DE BATTERIE COMPRENANT UN ÉQUIPEMENT D'AUTOMATISATION DE RECONDITIONNEMENT ET PROCÉDÉ DE COMPTAGE DE QUANTITÉ DE RECONDITIONNEMENT

(30) Priority: 28.12.2020 KR 20200185100
(43) Date of publication of application: 28.12.2022
(73) Proprietor: LG Energy Solution, Ltd., Seoul 07335 (KR)
(72) Inventor: SU, Jun Hyo, Daejeon 34122 (KR); KANG, Jeong Hwan, Daejeon 34122 (KR); PARK, Jong Seok, Daejeon 34122 (KR); SHIN, Hyun Seung, Daejeon 34122 (KR); HAN, Ki Deok, Daejeon 34122 (KR)
(74) Representative: Goddar, Heinz J.
(86) International application number: PCT/KR2021/017874
(87) International publication number: WO 2022/145747

(56) References cited:
- KR-A- 20180 049 512
- KR-B1- 101 347 975
- KR-B1- 101 468 309
- KR-B1- 101 819 255
- US-A1- 2013 317 639
- US-A1- 2013 317 639

## Description

### [Technical Field]

This application claims the benefit of priority to Korean Patent Application No. 2020-0185100 filed on December 28, 2020.

The present invention relates to a battery cell manufacturing apparatus including rework automation equipment and a rework quantity counting method using the same, and more particularly to a battery cell manufacturing apparatus capable of measuring the quantity of reworked battery cells while automatically performing rework and a rework quantity counting method using the same.

### [Background Art]

A lithium secondary battery has been used as an energy source for mobile devices and wearable devices, and has also been widely used as an energy source for electric vehicles and hybrid electric vehicles.

Based on the shape of a battery case, the lithium secondary battery is classified into a cylindrical secondary battery having an electrode assembly mounted in a cylindrical metal can, a prismatic secondary battery having an electrode assembly mounted in a prismatic metal can, or a pouch-shaped secondary battery having an electrode assembly mounted in a pouch-shaped case made of an aluminum laminate sheet.

The electrode assembly may be manufactured by stacking a positive electrode having a tab formed thereon and a negative electrode having a tab formed thereon such that a separator is interposed therebetween to manufacture a mono cell and stacking a plurality of mono cells or winding plurality of mono cells in the state in which the mono cells are disposed on a separation film.

The electrode assembly is received in a battery case and an electrolytic solution is injected into the battery case, or an electrode assembly using a solid electrolyte layer instead of the separator is received in the battery case, and the battery case is hermetically sealed to form a secondary battery.

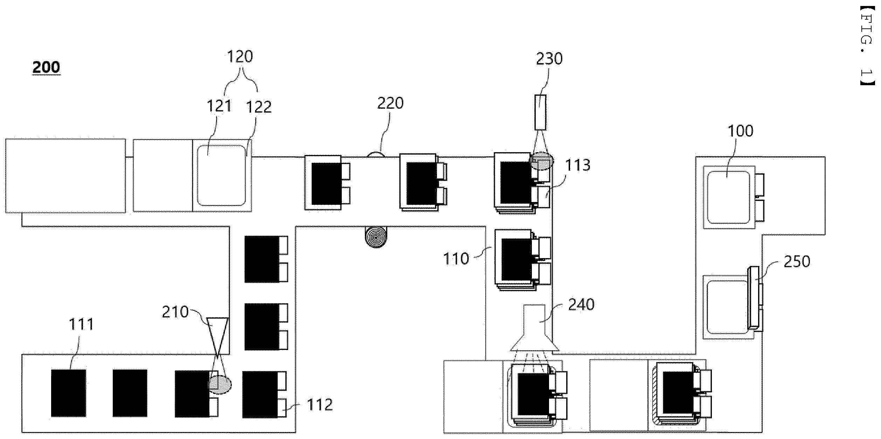

Conventional manufacture of a secondary battery will be described based on a pouch-shaped secondary battery. FIG. 1 is a schematic view of a conventional pouch-shaped secondary battery manufacturing apparatus.

A battery cell 100 is manufactured by a battery cell manufacturing apparatus 200.

In general, an electrode assembly 110 is formed by stacking or winding an electrode plate 111 constituted by at least one positive electrode or negative electrode and a separator.

The electrode assembly 110 may include an electrode tab 112 or an electrode lead 113 for connection with an external device. The electrode tab 112 may be separately formed and may be connected to one electrode plate 111, or a portion of an active material layer of the electrode plate 111 may be removed to form the electrode tab. At this time, the electrode tab 112 is formed by an electrode tab formation unit 210 of the battery cell manufacturing apparatus 200. The electrode tab formation unit 210 may be a welding machine configured to weld the electrode tab 112 to the electrode plate 111 or a laser device configured to remove the active material layer from the electrode plate 111 to form the electrode tab 112.

After the electrode tab 112 is formed on the electrode plate 111, as described above, at least one positive electrode, at least one separator, and at least one negative electrode may be stacked by a cell assembly formation unit 220. Subsequently, the electrode tabs 112 connected to the respective electrode plates 111 are gathered based on polarities thereof, and the electrode leads 113 having the same polarity are connected to each other using an electrode lead welding unit 230.

The electrode assembly 110 formed as described above is received in a battery case 120.

For a pouch-shaped battery case, for example, the battery case 120 may be constituted by a receiving portion 121 configured to receive the electrode assembly 110 and a sealed portion 122 configured to hermetically seal the receiving portion 121 around the receiving portion.

The electrode assembly 110 is received in the receiving portion 121, an electrolytic solution is injected into the receiving portion 121 using an electrolytic solution injection unit 240, and the battery case 120 is hermetically sealed using a sealing unit 250. In the case in which the electrode assembly 110 uses a solid electrolyte layer, the electrolytic solution injection process may be omitted.

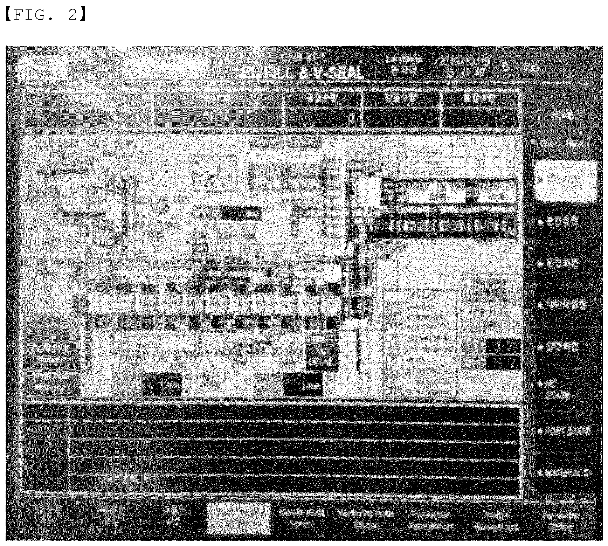

FIG. 2 shows a conventional defect quantity measurement system.

In a conventional defect quantity measurement method, when defective cells are reworked, an equipment process for rework is individually selected, and defective cells are marked by hand. That is, in the conventional defect quantity measurement method, only the initial supply quantity, good quantity, and defect quantity are checked, and the quantity of battery cells as good products obtained through rework is not automatically checked, whereby it is difficult to calculate an accurate defect rate.

In Patent Document 1, a marking device configured to mark the record of a secondary battery is provided to mark the occurrence of defective secondary batteries or rework thereon; however, this is not for defect rate calculation, and there is a problem in that a ratio of defect quantity to input quantity is checked in units of secondary batteries.

Consequently, there is a need for a battery cell manufacturing apparatus capable of automatically checking a ratio of defect quantity to input quantity.

(Patent Document 1) Korean Patent Application Publication No. 2016-0061756.
US 2013 / 0317639 A1 relates to the automatic checking, validation and post-processing of batteries.

### [Disclosure]

### [Technical Problem]

The present invention solves the problems known from the prior art by means of the features of the independent claims. Particular examples of the present invention are given by the features of the dependent claims. The present invention has been made in view of the above problems, and it is an object of the present invention to provide a battery cell manufacturing apparatus capable of automatically checking a ratio of defect quantity to input quantity.

It is another object of the present invention to provide a battery cell manufacturing apparatus capable of automatically performing rework based on the defect types of reworked battery cells and measuring the quantity of reworked battery cells.

### [Technical Solution]

A battery cell manufacturing apparatus according to the present invention to accomplish the above objects includes rework automation equipment configured to automatically rework battery cells determined to be defective.

The rework automation equipment includes a sorting unit configured to sort the battery cells based on battery cell-specific rework types predesignated by a user and a rework unit configured to automatically rework the battery cells sorted by the sorting unit based on the rework types.

The sorting unit may include a type-specific quantity measurement portion configured to check the quantity of battery cells while sorting the battery cells based on the battery cell-specific rework types.

The rework automation equipment further includes a detection unit configured to determine whether any of the battery cells reworked by the rework unit are abnormal, a separation unit configured to separate battery cells determined to be defective according to the result of the detection unit, and a defect quantity measurement unit configured to check the quantity of battery cells determined to be defective by the detection unit, among the battery cells reworked by the rework unit based on the rework types.

The defect quantity measurement unit may measure the quantities of battery cells based on defect types of the battery cells.

The sorting unit may be configured to automatically sort defect types of the battery cells, or the sorting unit may include a button configured to be manually operated depending on the defect types.

The rework types may be sorted according to work steps, such as a battery cell input step, a tab welding step, a cell assembly formation step, an electrolytic solution injection step, and a sealing step, or may be sorted according to a rework method based on defects.

The rework may be performed more than once.

The quantity of battery cells determined not to be reworkable by the sorting unit may be measured as defect quantity.

The present invention provides a rework quantity counting method including (S1) setting, by a user, rework types for individual battery cells determined to be defective and inputting the individual battery cells determined to be defective; (S2) checking, by a sorting unit, the quantity of type-specific battery cells to be reworked while sorting the battery cells based on the rework types of the battery cells; (S3) reworking, by a rework unit, the battery cells to be reworked based on the rework types; (S4) determining, by a detection unit, whether the reworked battery cells are defective, separating, by a separation unit, battery cells determined to be defective, and checking, by a defect quantity measurement unit, the quantity of the battery cells determined to be defective; and (S5) subtracting the quantity of the battery cells input in step (S1) from the quantity of the defective battery cells checked in step (S4) to calculate the quantity of final defective battery cells.

Step (S2) and step (S3) may be performed more than once.

A defect rate may be determined based on the quantity of the final defective battery cells in step (S5) and the quantity of initially input battery cells, and a rework defect rate may be determined through the quantity of the type-specific battery cells to be reworked in step (S2).

### [Advantageous Effects]

A battery cell manufacturing apparatus according to the present invention is capable of automatically reworking defective battery cells based on rework types, thereby improving battery cell production time and battery cell quality.

In addition, it is possible to mechanically check the quantity of reworked battery cells, whereby it is possible to check a type-specific defect rate when battery cells are manufactured and to easily derive defect type-specific improvements. Furthermore, it is possible to easily check a ratio of defect quantity to total input quantity.

### [Description of Drawings]

FIG. 1 is a schematic view of a conventional pouch-shaped secondary battery manufacturing apparatus.
FIG. 2 shows a conventional defect quantity measurement system.
FIG. 3 is a schematic view of a pouch-shaped secondary battery manufacturing apparatus according to the present invention.
FIG. 4 shows a defect quantity measurement system according to the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell manufacturing apparatus according to the present invention and a rework quantity counting method using the same will be described in detail with reference to the accompanying drawings.

The battery cell manufacturing apparatus according to the present invention may be applied to all kinds of batteries, such as a cylindrical secondary battery, a prismatic battery, and a pouch-shaped secondary battery; however, a pouch-shaped secondary battery manufacturing apparatus will be described hereinafter for convenience of description.

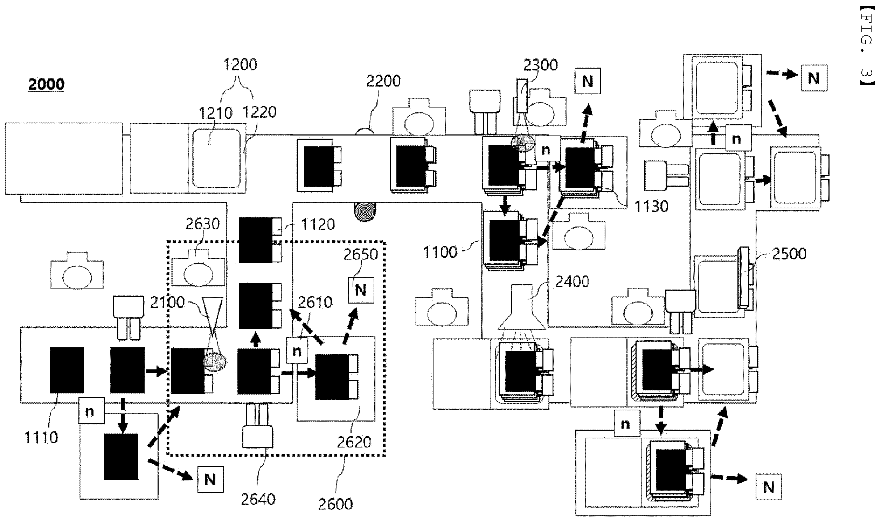

FIG. 3 is a schematic view of a pouch-shaped secondary battery manufacturing apparatus according to the present invention.

A battery cell 1000 according to the present invention is manufactured by a battery cell manufacturing apparatus 2000 including rework automation equipment 2600.

When an electrode plate 1110 is input to the battery cell manufacturing apparatus 2000, an electrode tab formation unit 2100 of the battery cell manufacturing apparatus 2000 welds an electrode tab 1120 to the electrode plate 1110, or removes a portion of an active material layer of the electrode plate 1110 and punches a non-coated portion to form an electrode tab 1120.

The electrode plate 1110 may be a positive electrode or a negative electrode.

For example, the positive electrode may be manufactured by applying a positive electrode mixture of a positive electrode active material constituted by positive electrode active material particles, a conductive agent, and a binder to a positive electrode current collector. A filler may be further added to the positive electrode mixture as needed.

In general, the positive electrode current collector is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material may be constituted, for example, by a layered compound, such as lithium nickel oxide (LiNiO₂), or a compound substituted with one or more transition metals; a lithium manganese oxide represented by the chemical formula Li₁₊ₓMn₂₋ₓO₄ (where x = 0 to 0.33) or lithium manganese oxide, such as LiMnO₃, LiMn₂O₃, or LiMnO₂; lithium copper oxide (Li₂CuO₂); vanadium oxide, such as LiV₃O₈, LiV₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

The conductive agent is generally added so that the conductive agent accounts for 0.1 to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode, is a component assisting in binding between the active material and the conductive agent and in binding with the current collector. The binder is generally added in an amount of 0.1 to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluoro rubber, and various copolymers.

The negative electrode is manufactured by applying a negative electrode active material to a negative electrode current collector and drying the same. The above-described components may be selectively further included as needed.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

Subsequently, the electrode plate 1110 having the electrode tab 1120 formed thereon and a separator are stacked through a cell assembly formation unit 2200 to form a cell assembly, and an electrode lead 1130 is welded to the cell assembly through a lead welding unit 2300, or a bundle of electrode tabs 1120 is formed so as to be connected to an external device.

An electrode assembly 1100 having the electrode lead 1130 formed thereon is received in a receiving portion 1210 of a battery case 1200. Subsequently, an electrolytic solution is injected into the battery case 1200, in which the electrode assembly 1100 is received, using an electrolytic solution injection unit 2400. In the case in which the electrode assembly 1100 uses a solid electrolyte layer, the electrolytic solution injection process may be omitted.

Subsequently, a portion 1220 to be sealed of the battery case 1200, in which the electrode assembly 1100 is received, is sealed using a sealing unit 2500 to form a battery cell 1000.

The present invention includes rework automation equipment 2600 configured to determine whether the electrode palte 1110, the cell assembly, the electrode assembly 1100, or the battery cell 1000 formed in each of the above steps is defective, and to automatically rework the battery cell 1000 determined to be defective.

The rework automation equipment 2600 includes a sorting unit 2610 configured to sort battery cells 1000 based on battery cell-specific rework types predesignated by a user and a rework unit 2620 configured to automatically rework the battery cells 1000 sorted by the sorting unit 2610 based on types.

The sorting unit 2610 is configured to automatically sort defect types of the battery cells 1000. The sorting unit 2610 may include a button configured to be manually operated depending on the defect types.

When the sorting unit 2610 is automatically operated, the sorting unit 2610 may be provided with a sensor configured to determine the defect types. The sensor may include a transmission portion configured to transmit a signal and a reception portion configured to receive the signal in order to determine whether the battery cell 1000 is defective based on light or wavelength transmitted by the transmission portion, or may include a digital camera configured to photograph the shape of the battery cell 1000 so as to be compared to pre-stored data. In addition, the weight of the battery cell 1000 may be measured, and when the measured weight exceeds a weight error range, the battery cell 1000 may be determined to be defective.

When the sorting unit 2610 is manually operated, the sorting unit 2610 may be provided for each step such that the user determines the defect types.

The sorting unit 2610 may include a type-specific quantity measurement portion configured to check the quantity of battery cells 1000 while sorting the battery cells 1000 based on battery cell-specific rework types.

A detection unit 2630 configured to determine whether the battery cells 1000 reworked by the rework unit 2620 are abnormal, a separation unit 2640 configured to separate battery cells determined to be defective according to the result of the detection unit, and a defect quantity measurement unit 2650 configured to check the quantity of battery cells 1000 determined to be defective by the detection unit 2630, among the battery cells 1000 reworked by the rework unit 2620 based on the types, may be provided, whereby it is possible to measure the quantity N of battery cells 1000 finally determined to be defective. At this time, the quantity of battery cells finally determined to be defective includes the quantity of battery cells 1000 sorted as defective battery cells to be reworked by the sorting unit 2610.

Rework may be performed more than once. Consequently, the number of input battery cells 1000 increases to the sum of the quantity of initially input battery cells 1000 and the quantity n of re-input battery cells 1000, whereby the quantity different from the quantity of initially input battery cells 1000 is measured. When a defect rate is calculated, however, the quantity n of re-input battery cells 1000 may be excluded and therefore the quantity of initially input battery cells 1000 may be measured. Consequently, the defect rate may be calculated using only the initial input quantity excluding the quantity N of battery cells 1000 finally determined to be defective and the quantity of re-input battery cells 1000.

In addition, the defect quantity measurement unit 2650 may measure the quantity of battery cells 1000 based on the defect types, and therefore statistics showing which part has a high defect rate may be provided.

As an example, the defect types may include an error in a direction in which the electrode plate 1110 is input, abnormal application of the active material layer, a direction error of the electrode tab 112, a welding error of the electrode tab 112, non-attachment of the electrode lead 1130, an error in injection capacity of the electrolytic solution, an uninsulated state, and lack in sealing force of the battery case 1200.

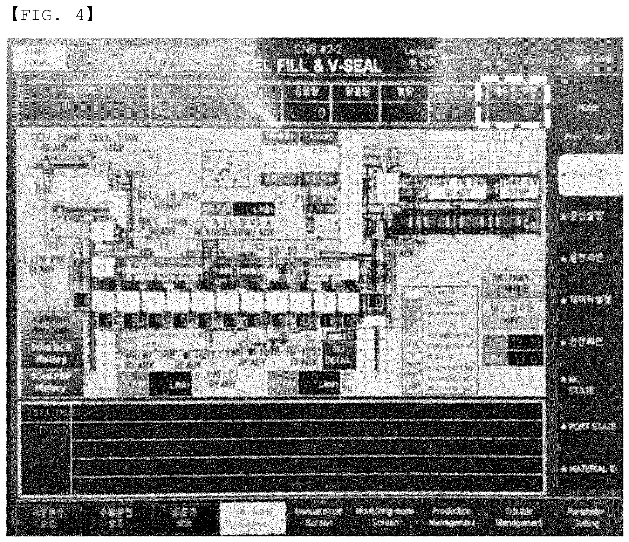

FIG. 4 shows a defect quantity measurement system according to the present invention.

As can be seen from FIG. 4, the defect quantity measurement system according to the present invention may be connected to the rework automation equipment 2600 in order to measure re-input quantity and defect quantity. The re-input quantity and the defect quantity may be checked for each work, which part has a high defect rate for each defect type may be checked, and which part has improvements may be checked.

A rework quantity counting method according to the present invention includes (S1) a step of setting, by the user, rework types for individual battery cells determined to be defective and inputting the individual battery cells determined to be defective; (S2) a step of checking, by the sorting unit, the quantity of type-specific battery cells to be reworked while sorting the battery cells based on the rework types of the battery cells; (S3) a step of reworking, by the rework unit, the battery cells to be reworked based on the types; (S4) a step of determining, by the detection unit, whether the reworked battery cells are defective, separating, by the separation unit, battery cells determined to be defective, and checking, by the defect quantity measurement unit, the quantity of the battery cells determined to be defective; and (S5) a step of subtracting the quantity of the battery cells input in step (S1) from the quantity of the defective battery cells checked in step (S4) to calculate the quantity of final defective battery cells.

At this time, step (S2) and step (S3) may be performed more than once.

The rework types may be adjusted according to user convenience.

As an example, the rework types may be sorted according to a step of forming an electrode assembly or a battery case of a battery cell, or may be sorted according to a rework method based on each defect type.

At this time, although the defect type may be changed depending on each set value, the case in which the difference between a stored value and the average value is 10% or more may be sorted as a defect.

As an example, when an electrode plate is punched using a press to form an electrode having a non-coated portion and a coated portion, the case in which deviation from the average value of a conventional electrode plate exceeds a value of ± 0.1 mm to 0.15 mm may be determined to be defective.

In addition, when the defect is determined using a method of determining a match rate with a registered program, the case in which a match rate with conventional data is less than 80% may be determined to be defective.

At this time, one or more defect detection methods may be used in order to reduce errors.

In the rework step, work suitable for battery cells separated for each type may be individually performed. As an example, the rework may be performed using a method of reworking battery cells to be reworked on a separate rework table and performing the same process as other battery cells, or may be performed using a method of placing battery cells necessary to be reworked in a process before defects occur and performing work again.

Subsequently, battery cells that cannot be reworked or battery cells still defective even after rework are determined to be defective. At this time, marking may be performed in order to clearly indicate whether the battery cells are defective.

A defect rate may be determined based on the quantity of the final defective battery cells in step (S5) and the quantity of initially input battery cells, and a rework defect rate may be determined through the quantity of the type-specific battery cells to be reworked in step (S2).

That is, a step of calculating a total defect rate and a rework type-specific rework defect rate may be performed.

Although the specific details of the present invention have been described in detail, those skilled in the art will appreciate that the detailed description thereof discloses only preferred embodiments of the present invention and thus does not limit the scope of the present invention.

### (Description of Reference Numerals)

100, 1000: Battery cells
110, 1100: Electrode assemblies
111, 1110: Electrode plates
112, 1120: Electrode tabs
113, 1130: Electrode leads
120, 1200: Battery cases
121, 1210: Receiving portions
122, 1220: Sealed portions
200, 2000: Battery cell manufacturing apparatuses
210, 2100: Tab formation units
220, 2200: Cell assembly formation units
230, 2300: Electrode lead welding units
240, 2400: Electrolytic solution injection units
250, 2500: Sealing units
2600: Rework automation equipment
2610: Sorting unit
2620: Rework unit
2630: Detection unit
2640: Separation unit
2650: Defect quantity measurement unit

### [Industrial Applicability]

The present invention relates to a battery cell manufacturing apparatus including rework automation equipment and a rework quantity counting method using the same, and more particularly to a battery cell manufacturing apparatus capable of measuring the quantity of reworked battery cells while automatically performing rework and a rework quantity counting method using the same, and therefore the present invention has industrial applicability.

## Claims

1. A rework quantity counting method comprising:
(S1) setting, by a user, rework types for individual battery cells determined to be defective and inputting the individual battery cells determined to be defective;
(S2) checking, by a sorting unit (2610), a quantity of type-specific battery cells to be reworked while sorting the battery cells based on the rework types of the battery cells;
(S3) reworking, by a rework unit (2620), the battery cells to be reworked based on the rework types;
(S4) determining, by a detection unit (2630), whether the reworked battery cells are defective, separating, by a separation unit (2640), battery cells determined to be defective, and checking, by a defect quantity measurement unit (2650), a quantity of the battery cells determined to be defective; and
(S5) subtracting the quantity of the battery cells input in step (S1) from the quantity of the defective battery cells checked in step (S4) to calculate a quantity of final defective battery cells.

2. The rework quantity counting method according to claim 1, wherein step (S2) and step (S3) are performed more than once.

3. The rework quantity counting method according to claim 1, wherein a defect rate is determined based on the quantity of the final defective battery cells in step (S5) and a quantity of initially input battery cells, and a rework defect rate is determined through the quantity of the type-specific battery cells to be reworked in step (S2).

4. A battery cell manufacturing apparatus (2000) comprising rework automation equipment (2600) configured to automatically rework battery cells (1000) determined to be defective, wherein the rework automation equipment (2600) comprises:
a sorting unit (2610) configured to sort the battery cells based on battery cell-specific rework types predesignated by a user; and
a rework unit (2620) configured to automatically rework the battery cells sorted by the sorting unit based on the rework types;
a detection unit (2630) configured to determine whether any of the battery cells reworked by the rework unit are abnormal;
a separation unit (2640) configured to separate battery cells determined to be defective according to a result of the detection unit; and
a defect quantity measurement unit (2650) configured to check the quantity of battery cells determined to be defective by the detection unit, among the battery cells reworked by the rework unit based on the rework types.

5. The battery cell manufacturing apparatus (2000) according to claim 4, wherein the sorting unit (2610) comprises a type-specific quantity measurement portion configured to check a quantity of battery cells while sorting the battery cells based on the battery cell-specific rework types.

6. The battery cell manufacturing apparatus (2000) according to claim 4, wherein the defect quantity measurement unit (2650) measures quantities of battery cells (1000) based on defect types of the battery cells (1000).

7. The battery cell manufacturing apparatus (2000) according to claim 4, wherein the sorting unit (2610) is configured to automatically sort defect types of the battery cells (1000), or the sorting unit (2610) comprises a button configured to be manually operated depending on the defect types.

8. The battery cell manufacturing apparatus (2000) according to claim 4, wherein the rework types are sorted according to work steps, such as a battery cell input step, a tab welding step, a cell assembly formation step, an electrolytic solution injection step, and a sealing step, or are sorted according to a rework method based on defects.

9. The battery cell manufacturing apparatus (2000) according to claim 4, wherein the rework is performed more than once.

10. The battery cell manufacturing apparatus (2000) according to claim 4, wherein a quantity of battery cells (1000) determined not to be reworkable by the sorting unit (2610) is measured as a defect quantity.

## Patentansprüche

1. Ein Nachbearbeitungsmengen-Zählverfahren, umfassend:
(S1) Einstellen von Nacharbeitstypen für einzelne als defekt ermittelte Batteriezellen durch einen Benutzer und Eingeben der einzelnen als defekt ermittelten Batteriezellen;
(S2) Prüfen einer Menge von typspezifischen Batteriezellen, die nachzubearbeiten sind, durch eine Sortiereinheit (2610), während die Batteriezellen basierend auf den Nacharbeitstypen der Batteriezellen sortiert werden;
(S3) Nachbearbeiten der nachzubearbeitenden Batteriezellen durch eine Nachbearbeitungseinheit (2620) auf der Grundlage der Nachbearbeitungstypen;
(S4) Bestimmen, ob die nachbearbeiteten Batteriezellen defekt sind, durch eine Erfassungseinheit (2630), Trennen von Batteriezellen, die als defekt bestimmt wurden, durch eine Trenneinheit (2640), und Prüfen einer Menge der Batteriezellen, die als defekt bestimmt wurden, durch eine Defektmengenmesseinheit (2650); und
(S5) Subtrahieren der Menge der in Schritt (S1) eingegebenen Batteriezellen von der Menge der in Schritt (S4) überprüften defekten Batteriezellen, um die Menge der endgültig defekten Batteriezellen zu berechnen.

2. Nachbearbeitungsmengen-Zählverfahren nach Anspruch 1, wobei Schritt (S2) und Schritt (S3) mehr als einmal durchgeführt werden.

3. Nachbearbeitungsmengen-Zählverfahren nach Anspruch 1, wobei eine Fehlerrate auf der Grundlage der Menge der endgültig defekten Batteriezellen in Schritt (S5) und einer Menge der anfänglich eingegebenen Batteriezellen bestimmt wird, und eine Nachbearbeitungsfehlerrate durch die Menge der typspezifischen, nachzubearbeitenden Batteriezellen in Schritt (S2) bestimmt wird.

4. Batteriezellen-Herstellungsvorrichtung (2000), die eine Nachbearbeitungs-Automatisierungseinrichtung (2600) umfasst, die dazu konfiguriert ist, Batteriezellen (1000), die als fehlerhaft bestimmt wurden, automatisch nachzubearbeiten, wobei die Nachbearbeitungs-Automatisierungseinrichtung (2600) umfasst:
eine Sortiereinheit (2610), die dazu konfiguriert ist, die Batteriezellen auf der Grundlage von batteriezellenspezifischen Nacharbeitstypen zu sortieren, die von einem Benutzer vorbestimmt sind; und
eine Nachbearbeitungseinheit (2620), die dazu konfiguriert ist, die von der Sortiereinheit sortierten Batteriezellen automatisch auf der Grundlage der Nachbearbeitungstypen nachzubearbeiten;
eine Erfassungseinheit (2630), die dazu konfiguriert ist, festzustellen, ob eine der Batteriezellen, die von der Nachbearbeitungseinheit nachbearbeitet wurden, abnormal ist;
eine Trenneinheit (2640), die dazu konfiguriert ist, Batteriezellen, die gemäß einem Ergebnis der Erfassungseinheit als fehlerhaft bestimmt wurden, zu trennen; und
eine Defektmengenmesseinheit (2650), die dazu konfiguriert ist, die Menge der Batteriezellen, die von der Erfassungseinheit als defekt bestimmt wurden, unter den Batteriezellen, die von der Nachbearbeitungseinheit nachbearbeitet wurden, auf Basis der Nachbearbeitungstypen zu überprüfen.

5. Batteriezellen-Herstellungsvorrichtung (2000) nach Anspruch 4, wobei die Sortiereinheit (2610) einen typspezifischen Mengenmessabschnitt umfasst, der dazu konfiguriert ist, eine Menge von Batteriezellen zu überprüfen, während er die Batteriezellen auf der Grundlage der batteriezellenspezifischen Nacharbeitstypen sortiert.

6. Batteriezellen-Herstellungsvorrichtung (2000) nach Anspruch 4, wobei die Defektmengenmesseinheit (2650) Mengen von Batteriezellen (1000) auf der Grundlage von Defekttypen der Batteriezellen (1000) misst.

7. Batteriezellen-Herstellungsvorrichtung (2000) nach Anspruch 4, wobei die Sortiereinheit (2610) dazu konfiguriert, Defekttypen der Batteriezellen (1000) automatisch zu sortieren, oder wobei die Sortiereinheit (2610) einen Knopf umfasst, der so konfiguriert ist, dass er in Abhängigkeit von den Defekttypen manuell betätigbar ist.

8. Batteriezellen-Herstellungsvorrichtung (2000) nach Anspruch 4, wobei die Nacharbeitstypen nach Arbeitsschritten sortiert werden, wie einem Batteriezellen-Eingabeschritt, einem Laschen-Schweißschritt, einem Zellbaugruppen-Bildungsschritt, einem Elektrolytlösungs-Injektionsschritt und einem Versiegelungsschritt, oder nach einem Nacharbeitsverfahren auf Basis der Defekte sortiert werden.

9. Batteriezellenherstellungsvorrichtung (2000) nach Anspruch 4, wobei die Nacharbeit mehr als einmal durchgeführt wird.

10. Batteriezellen-Herstellungsvorrichtung (2000) nach Anspruch 4, wobei eine Menge von Batteriezellen (1000), die von der Sortiereinheit (2610) als nicht nachbearbeitbar bestimmt wird, als Defektmenge gemessen wird.

## Revendications

1. Procédé de comptage de quantité de reconditionnement consistant à :
(S1) régler, par un utilisateur, des types de reconditionnement pour des éléments de batterie individuels déterminés être défectueux et entrer les éléments de batterie individuels déterminés être défectueux;
(S2) vérifier, par une unité de tri (2610), une quantité d'éléments de batterie de types spécifiques à reconditionner pendant le triage des éléments de batterie sur la base des types de
reconditionnement des éléments de batterie ;
(S3) reconditionner, par une unité de reconditionnement (2620), les éléments de batterie à reconditionner sur la base des types de reconditionnement ;
(S4) déterminer, par une unité de détection (2630), si les éléments de batterie reconditionnés sont défectueux, séparer, par une unité de séparation (2640), les éléments de batterie déterminés être défectueux, et vérifier, par une unité de mesure de quantité de défauts
(2650), une quantité des éléments de batterie déterminés être défectueux ; et
(S5) soustraire la quantité des éléments de batterie entrés à l'étape (S1) à partir de la quantité des éléments de batterie défectueux vérifiés à l'étape (S4) pour calculer une quantité finale d'éléments de batterie défectueux.

2. Procédé de comptage de quantité de reconditionnement selon la revendication 1, dans lequel l'étape (S2) et l'étape (S3) sont effectuées plusieurs fois.

3. Procédé de comptage de quantité de reconditionnement selon la revendication 1, dans lequel un taux de défaut est déterminé sur la base de la quantité finale des éléments de batterie
défectueux à l'étape (S5) et d'une quantité de départ d'éléments de batterie entrés, et un taux de défaut de reconditionnement est déterminé par la quantité des éléments de batterie de type
spécifique à reconditionner à l'étape (S2).

4. Appareil de fabrication d'élément de batterie (2000) comprenant un équipement d'automatisation de reconditionnement (2600) configuré pour reconditionner automatiquement des éléments de batterie (1000) déterminés être défectueux, dans lequel l'équipement d'automatisation de reconditionnement (2600) comprend :
une unité de tri (2610) configurée pour trier les éléments de batterie sur la base des types de reconditionnement spécifiques des éléments de batterie prédésignés par un utilisateur ; et
une unité de reconditionnement (2620) configurée pour reconditionner automatiquement les éléments de batterie triés par l'unité de tri sur la base des types de reconditionnement ;
une unité de détection (2630) configurée pour déterminer si certains des éléments de batterie reconditionnés par l'unité de reconditionnement sont anormaux ;
une unité de séparation (2640) configurée pour séparer les éléments de batterie déterminés être défectueux en fonction d'un résultat de l'unité de détection ; et
une unité de mesure de quantité de défauts (2650) configurée pour vérifier la quantité d'éléments de batterie déterminés être défectueux par l'unité de détection, parmi les éléments de batterie reconditionnés par l'unité de reconditionnement sur la base des types de reconditionnement.

5. Appareil de fabrication d'élément de batterie (2000) selon la revendication 4, dans lequel l'unité de tri (2610) comprend une partie de mesure de quantité de types spécifiques configurés pour vérifier une quantité d'éléments de batterie pendant le triage des éléments de batterie sur la base des types de reconditionnement spécifiques des éléments de batterie.

6. Appareil de fabrication d'élément de batterie (2000) selon la revendication 4, dans lequel l'unité de mesure de quantité de défauts (2650) mesure des quantités d'éléments de batterie (1000) sur la base de types de défauts des éléments de batterie (1000).

7. Appareil de fabrication d'élément de batterie (2000) selon la revendication 4, dans lequel l'unité de tri (2610) est configurée pour trier automatiquement les types de défauts des éléments de batterie (1000) ou l'unité de tri (2610) comprend un bouton configuré pour être actionné manuellement en fonction des types de défauts.

8. Appareil de fabrication d'élément de batterie (2000) selon la revendication 4, dans lequel les types de reconditionnement sont triés en fonction des étapes de travail, par exemple
une étape d'entrée d'éléments de batterie, une étape de soudure de languette, une étape de formation d'ensemble d'éléments, une étape d'injection de solution électrolytique et une étape
d'étanchéification, ou sont triés en fonction d'un procédé de reconditionnement sur la base de
défauts.

9. Appareil de fabrication d'élément de batterie (2000) selon la revendication 4, dans lequel le reconditionnement est effectué plusieurs fois.

10. Appareil de fabrication d'élément de batterie (2000) selon la revendication 4, dans lequel une quantité d'éléments de batterie (1000) déterminés ne pas être reconditionnables par l'unité de tri (2610) est mesurée en tant que quantité de défauts.
